# EUROPEAN PATENT APPLICATION

(11) **EP 1 726 571 A1**
(43) Date of publication of application: **29.11.2006**
(21) Application number: 05380104.9
(22) Date of filing: 24.05.2005
(51) Int. Cl.: C02F 9/00

(54) **Processor for purifying potable water from a spring or mains suply**

(71) Applicant: Agua Nafree, S.A., 30564 Lorqui (ES)
(72) Inventor: Huguet Vinas, Manuel, 30564 Lorqui (ES)
(74) Representative: Marques Alos, Fernando

(57) **Abstract**

Processor for purifying potable water from a spring or mains supply" of the type designed to process water of variable composition to re-establish it with a stable and controlled mineral composition, characterised essentially because water from various origins, such as a spring or the mains itself, passes first through a filter (1) for particles of average calibre, then passing if necessary through a unit to remove disinfecting chlorine (2), then passing through a calcium removal unit (3), then being led through conduits to a double membrane reverse osmosis unit (12) and then to a total filter unit (14) from which it is obtained finally highly demineralised and purified. Next the water is directed to a mineralizing unit (16) capable of adding to it certain quantities of chlorides and/or sodium sulphates, calcium sulphate or other similar compounds, in order to mineralize this water under control.

## Description

The subject of this invention, as is expressed in the heading of this descriptive memorandum, consists of a processing plant for water, of the kind used in the food industry, to give the water certain physical-chemical and flavour properties.

At present, the types of water destined to human consumption can be classified into two large groups: waters for direct consumption and waters used for the re-hydration of syrups, juices or dehydrated foods.

Waters for direct consumption include all those which are offered to the user with names, such as mineral waters or similar, which are sometimes bottled directly as taken from the extraction point and other times are bottled after having been subjected to specific processes of purification and/or enrichment on the basis of metal ions, mineral salts, etc.

Waters for re-hydration of products of human consumption are those which are used either to increase the proportion of water in products which previously contained a certain amount of it (such as, for example: concentrated fruit juices, condensed milks or syrups designed for the preparation of cola drinks) or to supply the total amount of water needed for products previously dried by exposure to the atmosphere, application of high temperatures or freeze drying (such as freeze-dried coffee, powdered milk or some freeze-dried medicines).

In the case of water for re-hydration of products for human consumption, normally either mineral (or similar) waters, or water from the general mains supply can be used, without distinction.

However, in the case of certain special foods (or also other special products such as freeze-dried medicines), these cannot be re-hydrated with ordinary water.

This is precisely the case of the special foods that patients with certain illnesses must receive, such as, for example, cardiac and kidney disorders: for these patients there has to be an exhaustive check on the contribution of ions (such as sodium or potassium) in their diet and certain mineral salts. For this reason, when foods are used which have been previously dried (either freeze-dried or by another similar method) to improve their transport and preservation, they have to be re-hydrated subsequently with water specially prepared for these types of patients.

Another example of the use of specially prepared water is the case of re-hydrating medicines which have been previously dried for transport and/or preservation (by freeze drying or similar).

Another important use of specially prepared water is the hydration of foods for bottle-fed babies, for example, the first cereals or powdered milk.

There are also other applications for specially prepared water in which, although the use is not as critical as in the above cases, it is still essential to use it. This is the case of concentrated fruit juices and the syrups used to make cola drinks; in some cases, the quantity of components resulting from an analysis of these products is very varied: solid residue, vitamins, organic acids, mineral salts, etc. To increase the proportion of water in products such as these, so that they reach the consumer with the proper degree of dilution, it is convenient to use prepared water as, otherwise, undesired chemical-physical reactions can take place which could alter the characteristic chemical and flavour qualities expected, and this would be in detriment to the quality of the final product.

In all these cases, as well as needing a water with specific physical-chemical properties, as has already been said, the water also have a specific degree of asepsis; only thus can it be suitable for human consumption.

With the purpose of solving the problems mentioned above and other possible ones, a novel processing plant has been designed for purifying potable water, capable of producing water with a sufficient degree of purity and asepsis and in such quantities as make its installation profitable.

The new processing plant is designed to use any type of water: from the general mains supply, from a spring or from any other similar source of supply.

The new processing plant consists of the elements which are described hereunder.

First, there is a filter unit for the retention of solid particles of a certain calibre, such as dust, sand and fibres of various kinds.

Second, there is a unit to remove chlorine, for application in the case of using water from the general mains.

Third, it has a calcium removal unit, the activation or deactivation of which depends on the degree of hardness of the incoming water. This unit is formed of two decalcifier chains working alternately, so that when the first of the two chains becomes saturated with calcium and has to be regenerated, it automatically stops and the second starts up (and vice versa); this guarantees the uninterrupted production of decalcified water.

Each decalcifier chain is formed of: a complete decalcifier column constructed with materials appropriate for food use and carrying a load of ion exchange resins, a tank containing regenerating brine with a reserve of salt sufficient for several regenerations, a pneumatic valve to close water inlet to the decalcifier column during its regeneration process, so that when the water passes over these resins, the calcium and magnesium ions are exchanged for sodium ions in such a way that the first are retained in the resin and the last are incorporated into the water. This process continues until all the sodium ions in the resin have been exchanged, at which point its regeneration is necessary in order to return to the beginning of the cycle. To do this there has to be a saturated solution of brine which circulates through the resins. At this moment, due to the high concentration of sodium existing, the exchange of ions will be inverted and the resin take up a new charge of sodium ions and release the retained calcium and magnesium, which will go to the drains.

The decalcifier column is supplemented with an internal mixer valve to adjust the residual hardness of the water to a desired value, a control panel mounted on the decalcifier column and controlled by microprocessor (the principal purpose of which, among others, is to coordinate with the control panel of the other decalcifier chain in controlling the alternate functioning of the two chains) and, lastly, an electronic or similar meter (emitting counting impulses) incorporated into the column control panel.

Fourth, there is a double membrane reverse osmosis unit; in this stage of the process the water is subjected to a first pressure against a capillary membrane in such a way that the contaminants and some solutes remain on one side of the membrane while the purified water passes to the other side; then a second pressure is applied to the water against another capillary membrane finer than the first. In this stage all types of minerals are removed, especially dissolved sodium salts, and including any residual chlorine which may have passed through the chlorine removing unit described above.

This unit is made up of: a security 5 micrometer pre-filter, pressure pumps, pressure modules, conductivity control equipment and connection circuits. The unit is also provided with a system for automatic cleaning of the filters, which is activated when these are occluded by an accumulation of detritus and cease working. The unit also has its own control panel to control its functioning.

Fifth, the system has an absolute filtration unit the purpose of which is to remove the last vestiges of mineral and/or biological residues which may have been able to pass through the earlier filtration units or which could have been generated in the internal conduits of the processing plant itself. This unit is formed of a container of polished stainless steel or similar, inside which is an assembly of cartridges (preferably between 20 and 40 inches) for absolute filtration to 0.22 nanometres. This filter unit is directly connected to a re-circulation circuit and an accumulation tank.

Sixth, there is an ultraviolet irradiation unit, of optional activation, for the purpose of sterilising the processed water, benefiting from its passage through the re-circulation circuit mentioned above.

Seventh, a mineralising unit optionally supplies the treated water with small amounts of certain chemical compounds, for the purpose of controlled mineralising of the processed water to give it the desired physical-chemical properties and flavour qualities. At this stage there are added to the water, preferably, compounds such as chlorides and calcium sulphates, potassium chloride, etc., in quantities which normally range between 40 and 80 milligrams per litre (ppm) of water.

Eighth and last, a packaging unit will introduce the water, now processed, into adequate containers for the use to which it is destined: ampoules for injections, glass or tetrabrik containers, etc. This step is carried out preferably in a sterile atmosphere (and preferably under vacuum), to ensure that the freedom from infection and sterilization of the water are maintained during the packaging process and continue to be maintained after packaging.

The functioning of the new processing plant for purifying potable water is described hereunder. The water, from a spring or from the general mains or from any other massive source of supply, arrives at the first filter for retention of solid particles, where particles of an appreciable size are removed. Then, if the water is from the general mains, it must pass through the unit that removes the chlorine (used to disinfect water in the general mains network). Next, the water will pass optionally through the calcium removal unit (through one of the two alternating decalcifier chains: the one active at the time), if its degree of hardness so requires. Then, the water must pass through the double membrane reverse osmosis unit, where it is subjected to a second and more demanding filtration process. Then the water progresses to the absolute filtration unit where the last vestiges of minerals and biological residues will be removed. The ultraviolet irradiation unit is where the water will be sterilised. Also, optionally, the water can pass through the mineralising unit, where it will be given the physical-chemical and flavour qualities desired by the client. Lastly, the sterilised water arrives at the packaging unit where it will be introduced into hermetic and sterile receptacles suited to the use for which this water is destined; the packaging is preferably done under vacuum.

### DESCRIPTION OF THE DRAWINGS

With the purpose of illustrating what has been explained above, the present descriptive memorandum is accompanied by a set of drawings, forming an integral part of it and representing in a simplified and schematic way a practical example showing, in an explanatory way but not limiting, the characteristics of the processing plant for purifying potable water.

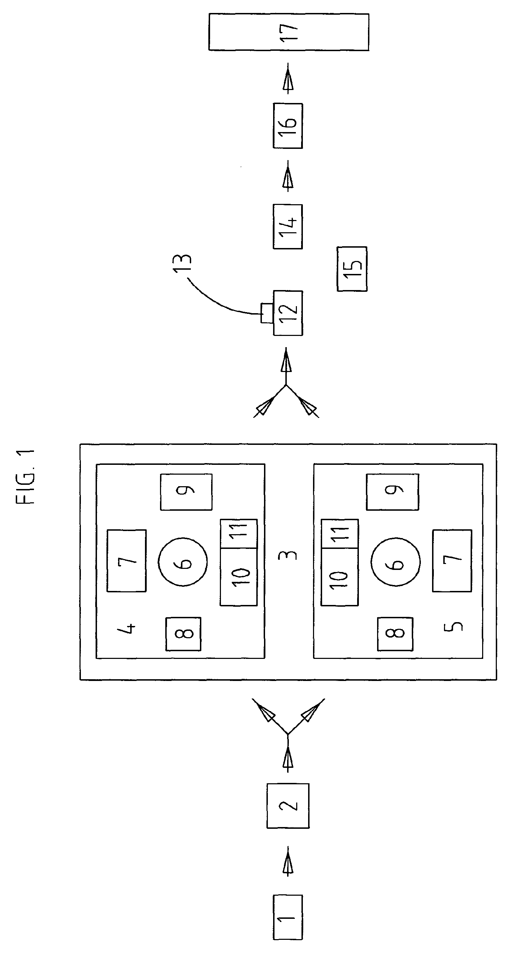

Figure 1 shows a diagram of blocks of the elements constituting the processing plantr.

### DESCRIPTION OF A PRACTICAL CASE

The figures accompanying this memorandum describe, as an example, a practical case of the use of the apparatus the subject of it.

The novel processing plant consists of the elements described hereunder.

First, there is a filter unit (1) to retain solid particles of a certain size, such as dust, fine sand or fibres of various characteristics.

Second, there is a chlorine removal unit (2), for use when chlorinated water from the general mains is used.

Third, there is the calcium removal unit (3), which is activated or not according to the degree of hardness of the incoming water. This unit is formed of two direct volumetric decalcifier chains (4 and 5) working alternately, in such a way that when the first (4) of the two chains becomes saturated with calcium and needs to be regenerated, it automatically stops and the second (5) comes into operation, and vice versa; thus guaranteeing an uninterrupted supply of decalcified water. Each decalcifier chain is formed of: a complete decalcifier column (6) constructed with materials appropriate for food use and filled with catalizer resins suitable to retain calcium, a tank (7) containing regenerating brine with a sufficient reserve of salt for several regenerations, a pneumatic valve (8) to close the water inlet to the corresponding decalcifier column during its regeneration process, an internal mixer valve (9) to adjust the residual hardness of the water to the desired value, a control panel (10) mounted on the decalcifier column and controlled by microprocessor (the principal purpose of which, among others, is to coordinate with the control panel (10) of the other decalcifier chain in controlling the alternate functioning of the two chains) and, finally, an electronic meter (11) or similar (emitting counting impulses) incorporated into the control panel (10) of the column. With regard to the performance of each decalcifier chain, it can be said as an example that, for standard production (depending, of course, on the model of processor) of between 7,000 and 9,000 litres of water per hour almost completely decalcified, each alternating shift (before the corresponding regeneration) has a productive capacity of between 150 and 200 cubic metres, which, taking into account that there are two decalcifier chains working alternately, representing a total joint capacity (per regeneration cycle) of between 300 and 400 cubic metres, that is to say, some 40 hours.

Fourth, there is a double membrane reverse osmosis unit (12); in this stage of the process, a first pressure is applied to the water against a capillary membrane in such a way that the contaminants and some solutes remain on one side of the membrane and the purified water passes through to the other side; after this, a second pressure is applied to the water against a capillary membrane finer than the first. In this stage all kinds of minerals are removed, including any residual chlorine which may have been able to pass through the chlorine removing unit described above. This unit is formed of: a 5 micrometre safety prefilter, pressure pumps, pressure modules, conductivity control equipment and connection circuits. The unit is also provided with an automatic filter cleaning system, activated when these are occluded by an accumulation of detritus causing their stoppage. The unit also has its own control panel (13) for full control.

Fifth, it has a total filtration unit (14) the purpose of which is to remove the remaining mineral and/or biological residues which may have passed through the earlier filtrations or which could have been generated in the internal conduits of the processing plant itself. This unit is constituted by a container of polished stainless steel or similar, inside which are an assembly of cartridges (preferably of 30 inches) for total filtration at 0.22 nanometres. This filter unit is directly connected to a re-circulation circuit and an accumulation tank.

Sixth, there is an ultraviolet irradiation unit (15), the activation of which is optional, for the purpose of sterilization of the processed water, taking advantage of the passage of the water through the re-circulation circuit mentioned above.

Seventh, there is a mineralising unit (16) which optionally supplies to the treated water small quantities of specific chemical compounds, the purpose of which is controlled mineralising of the processed water to give it the desired physical-chemical properties and flavour qualities. At this stage there are added to the water, preferably, compounds such as chlorides and calcium sulphates, potassium chloride, etc., in amounts varying normally between 40 and 80 milligrams per litre (ppm) of water.

Eighth and lastly, a packaging unit (17) introduces the water, now processed, into containers appropriate for the use to which it is destined: ampoules for injections, glass or tetrabrik containers, etc. This step is made preferably in a sterile atmosphere, to ensure that the freedom from infection and sterilisation of the water are maintained during the packaging process and continue to be maintained after packaging. Packaging is preferably under vacuum.

The materials used in the manufacture of the various elements comprising this invention are independent of the subject of it, as are the shapes, dimensions and accessories which may be presented, being able to be replaced by others technically equivalent, provided that they do not affect its essential nature nor fall outside the ambit defined in the section of claims.

Having established the concept expressed, the note of claims is set out hereunder, summarising the novelties which it is sought to claim:

## Claims

1. processor for purifying potable water from a spring or mains supply" of the type designed to process water of variable composition to reestablish it with a stable and controlled mineral composition, **characterised** essentially because water from various origins, such as a spring or the mains itself, passes first through a filter (1) for particles of average calibre, then passing if necessary through a unit to remove disinfecting chlorine (2), then passing through a calcium removal unit (3), then being led through conduits to a double membrane reverse osmosis unit (12) and then to a total filter unit (14) from which it is obtained finally highly demineralised and purified.

2. processor for purifying potable water from a spring or mains supply", according to the above claim, **characterised by** the fact that the pure water can optionally be directed to a mineralising unit (16) capable of adding to it certain quantities of chlorides and/or sodium sulphates, calcium sulphate or other similar compounds, in order to mineralise this water under control.

3. processor for purifying potable water from a spring or mains supply", according to the above claims, **characterised by** incorporating an ultraviolet irradiation unit (15) activated preferably in concordance with the double membrane reverse osmosis unit or that of total filtering, in a re-circulation circuit.

4. processor for purifying potable water from a spring or mains supply", according to the above claims, **characterised by** the fact that the packaging unit (17) is capable of packaging under vacuum and in sterile conditions.
